# EUROPEAN PATENT APPLICATION

(11) **EP 1 912 469 A1**
(43) Date of publication of application: **16.04.2008**
(21) Application number: 06782174.4
(22) Date of filing: 02.08.2006
(51) Int. Cl.: H04R 7/02, G03B 21/56, H04R 1/00, H04R 1/02, H04R 7/04

(54) **SPEAKER FORMED WITH SCREEN AS A UNITARY BLOCK**

(30) Priority: 02.08.2005 JP 2005224403; 01.09.2005 JP 2005253700
(71) Applicant: Teijin Fibers Limited, Osaka-shi, Osaka 541-0054 (JP); Authentic, Ltd., Kawasaki-shi, Kanagawa 213-0002 (JP)
(72) Inventor: KURODA, Saori, Teijin Limited, Ibaraki-shi, Osaka 567-0006 (JP); YANO, Hitoshi, Teijin Techno Products Limited, Osaka-shi, Osaka 541-0054 (JP); KOSAKA, Kunio, AUTHENTIC, Ltd., Kawasaki-shi, Kanagawa 213-0002 (JP); TSUCHIDA, Mikihiko, AUTHENTIC, Ltd., Kawasaki-shi, Kanagawa 213-0002 (JP); KITOH, Hiroshi, Daiei Engineering Co., Ltd., Tokyo 104-0041 (JP)
(74) Representative: Betten & Resch
(86) International application number: PCT/JP2006/315305
(87) International publication number: WO 2007/015518

(57) **Abstract**

A screen-integrated speaker in which mutual interference among channels does not occur easily, a high quality sound and a wide range of frequency are ensured, flexible and light, and downsizing for storage and transport are easy owing to its easiness of rolling up and deployment under a multi-channel structure is provided. The screen-integrated speaker according to an aspect of the invention includes a screen mainly composed of a fibrous structure and an exciter mounted to the back surface of the screen. Preferably, a exciting panel is interposed between the exciter and the screen.

## Description

### BACKGROUND OF THE INVENTION

### 1. Field of the Invention

The present invention relates to a screen-integrated speaker used for conferences, lecture meetings, or home theaters.

### 2. Description of the Related Art

A speaker-integrated panel speaker which also serves as a screen for movies or the like is disclosed in the present applicant (JP-A-2000-125391). The panel speaker is configured to excite high-quality flexible vibrations by the provision of, for example, a moving coil type actuator (exciter) mounted on the back surface of a panel which also serves as a screen. A screen-integrated panel speaker having a foldable structure in which a plurality of the screen-integrated panel speakers in this configuration are connected with flexible sheets so as to be foldable and hence is easily downsized for storage or easily transported is also disclosed by the present applicant (JP-A-2000-236595).

There is also disclosed a technique to use a woven fabric of polyethylene naphthalate (PEN) impregnated with thermosetting resin as a material of a diaphragm such as a cone of an electromagnetic speaker (For example, JP-A-2005-101889).

In the screen-integrated panel speaker disclosed in JP-A-2000-125:391, panel (diaphragm) which serves as a screen has a honeycomb structure which resists easy sound attenuation owing to its high rigidity. Therefore, when configuring a multi-channel panel speaker on which a plurality of exciters having different frequency bands on a common panel, channels are subject to mutual interference. In order to avoid mutual interference among the channels, a complex structure in which acoustic separation is achieved by forming insections are formed on the panel at boundaries of the respective areas to mount the exciters is necessary. In the panel speaker, the speaker is a fixed type and hence there is a problem such that storage and transport are difficult.

In the foldable screen-integrated panel speaker disclosed in JP-A-2000-236595, downsizing for storage and convenience of transport are not satisfactory although they are improved to some extant.

Furthermore, the material of polyethylene naphthalate impregnated with thermosetting resin disclosed in JP-A-2005-101889 may be used for forming a diaphragm having sufficient rigidity when it is applied to cones of relatively compact electromagnetic speakers. However, when it is applied to the diaphragm which also serves as a display screen, since the dimensions of the screen are large, the rigidity is rather insufficient. When the rate of impregnation of the thermosetting rein is increased in order to enhance the rigidity of the screen, the weight of the screen is increased as a whole and, in addition, its flexibility is impaired in association with increase in rigidity, so that there arises a problem such that a large force is required for deploying and rolling up the screen.

### SUMMARY OF THE INVENTION

Accordingly, it is an object of the present invention to provide a screen-integrated speaker which hardly causes mutual interference among channels and is suitable for configuring a high-quality sound multi-channel speaker.

It is another object of the invention to provide a screen-integrated speaker which is light-weight as a whole, is sufficiently flexible and is easy to deploy and roll up.

In order to solve the problems in the related art, a screen-integrated speaker according to the invention includes a screen mainly composed of a fibrous structure and at least one actuator mounted to the back surface of the screen.

In the screen-integrated speaker according to an aspect of the invention, the at least one actuator is mounted to the back surface of the screen with the intermediary of at least one exciting panel.

In the screen-integrated speaker according to an aspect of the invention, the screen is formed with a light shielding layer and a light reflecting layer on one surface thereof.

In the screen-integrated speaker according to an aspect of the invention, the screen is further formed with a light-shielding layer on the surface opposite from the surface on which the light-shielding layer and the light-reflecting layer are formed.

In the screen-integrated speaker according to an aspect of the invention, the screen is composed of the fibrous structure including fiber-woven fabric or fiber-knitted fabric.

In the screen-integrated speaker according to an aspect of the invention, the cover factor of the fibrous structure is in the range from 1000 to 3000.

In the screen-integrated speaker according to an aspect of the invention, the weight/unit area of the fibrous structure is in the range from 50 to 400 g/m².

In the screen-integrated speaker according to an aspect of the invention, the apparent Young's modulus of fibers which constitutes the fibrous structure is in the range from 3000 N/mm² to 150000 N/mm².

In the screen-integrated speaker according to an aspect of the invention, the fibers which constitute the fibrous structure is polyethylene naphthalate.

In the screen-integrated speaker according to an aspect of the invention, the fibrous structure is impregnated with resin of 0.1 to 30 percent by weight.

In the screen-integrated speaker according to an aspect of the invention, the resin impregnated in the fibrous structure is saturated polyester resin.

In the screen-integrated speaker according to an aspect of the invention, the fibrous structure is calendered.

In the screen-integrated speaker according to an aspect of the invention, the at least one exciting panel has a structure in which resin is impregnated in a layered fibrous structure.

In the screen-integrated speaker according to an aspect of the invention, the resin which constitutes the fibrous structure used for the at least one exciting panel is polyethylene naphthalate.

In the screen-integrated speaker according to an aspect of the invention, the resin used for the at least one exciting panel is formed of thermosetting resin.

In the screen-integrated speaker according to an aspect of the invention, the thickness of the at least one exciting panel is in a range from 400 to 2000 µm.

In the screen-integrated speaker according to an aspect of the invention, the at least one exciting panel and the at least one actuator are mounted to arbitrary positions on the back surface of a display area formed on the screen.

In the screen-integrated speaker according to an aspect of the invention, the at least one exciting panel and the at least one actuator are mounted to arbitrary positions on the back surface of a non-display area formed on the screen.

In the screen-integrated speaker according to an aspect of the invention, the screen is provided with a speaker system as a subwoofer which also serves as a weight which provides a tensile force to the screen at the lower end thereof.

In the screen-integrated speaker according to an aspect of the invention, the screen is provided with a head frame in which an amplifier which drives the at least one actuator fixed or integrated at the upper end thereof.

In the screen-integrated speaker according to an aspect of the invention, a plurality of the actuators are mounted dispersedly to the at least one exciting panel.

In the screen-integrated speaker according to an aspect of the invention, a plurality of the exciting panel and the actuator generate sound at the left and right and the center by being mounted dispersedly at the left and right and the center of the back surface of the screen.

With the screen-integrated speaker according to the present invention, the screen being composed of the fibrous structure which has low rigidity and propagates a large amount of attenuation is used as the sounding body by means of vibrations. Therefore, by mounting a plurality of the actuators for the respective channels on the back surface of the screen, the mutual interference among the channels are effectively prevented without forming a specific structure for separating the channels, so that a multichannel speaker with high sound quality is achieved.

Also, according to the present invention, the screen-integrated speaker has a configuration using the screen composed of the fibrous structure which has low rigidity and is easy to roll up as the sounding body by means of vibrations, and hence the screen-integrated speaker which is small in dimensions for storage, and is easy to transport, install and clear away is achieved.

### BRIEF DESCRIPTION OF THE DRAWINGS

Fig. 1A is a front view illustrating a configuration of a screen-integrated speaker according to a first embodiment of the invention;
Fig. 1B is a side view illustrating the configuration of the screen-integrated speaker according to the first embodiment of the invention;
Fig. 1C is a partially enlarged side view illustrating the configuration of the screen-integrated speaker according to the first embodiment of the invention;
Fig. 2 is a partially exploded perspective view showing a configuration of the screen shown in Fig. 1;
Fig. 3 illustrates experimental data showing an acoustic feature of the screen-integrated speaker according to the first embodiment in comparison with a case in which an exciter is not used;
Fig. 4 is a front view showing a configuration of the screen-integrated speaker according to a second embodiment of the invention;
Fig. 5 illustrates the acoustic features of the screen-integrated speaker according to the embodiments shown in Fig. 1 and Fig. 4 in comparison with each other;
Fig. 6 is a front view showing a configuration of the souci according to a third embodiment of the invention;
Fig. 7 is a front view showing a configuration of the screen-integrated speaker according to a fourth embodiment of the invention;
Fig. 8 is a front view illustrating a configuration of the screen-integrated speaker according to a fifth embodiment of the invention; and
Fig. 9 is a perspective view of the screen-integrated speaker when viewed from the back side.

### DESCRIPTION OF THE PREFERRED EMBODIMENTS

According to one of the best modes for carrying out the present invention, since the at least one exciting panel having rigidity higher than a fibrous structure is interposed between the fibrous structure and an exciter instead of directly exciting a screen composed of the fibrous structure having low rigidity, highly efficient excitation of an high frequency and generation of wide-band high-quality sound are achieved.

According to another one of the best modes for carrying out the invention, the fibrous structure is composed of any one of woven fabric, knitted fabric and non-woven fabric, and preferably, is a fibrous structure including the woven-fabric or the knitted fabric.

[0036] According to another one of the best modes for carrying out the invention, the at least one actuator includes the plurality of actuators mounted dispersedly on the plurality of exciting panels. In this configuration, the thickness of the at least one actuator, for example, of the electromagnetic type, is reduced and hence the efficiency of excitation is improved and the widening of the band is enabled.

According to another one of the best modes for carrying out the invention, the at least one exciting panel and the at least one actuator includes the at least one exciting panel and the at least one actuator mounted dispersedly to the left and right and the center of the back surface of the screen. In this configuration, a screen composed of a base fabric which has lower rigidity and propagates larger amount of attenuation in comparison with the panel (diaphragm) in the related art is used as the sounding body, the plurality of exciting panels and actuators are mounted apart from each other, and hence the interference among actuators is alleviated.

According to another one of the best modes for carrying out the invention, a weight for providing a tensile force optimal for the screen is provided at the lower end of the screen composed of the fibrous structure, and the weight also serves as a cylindrical speaker system as a subwoofer. The weight may be a speaker system having a shape other than the cylindrical shape (for example, prism, conical, pyramid, or spherical shape)

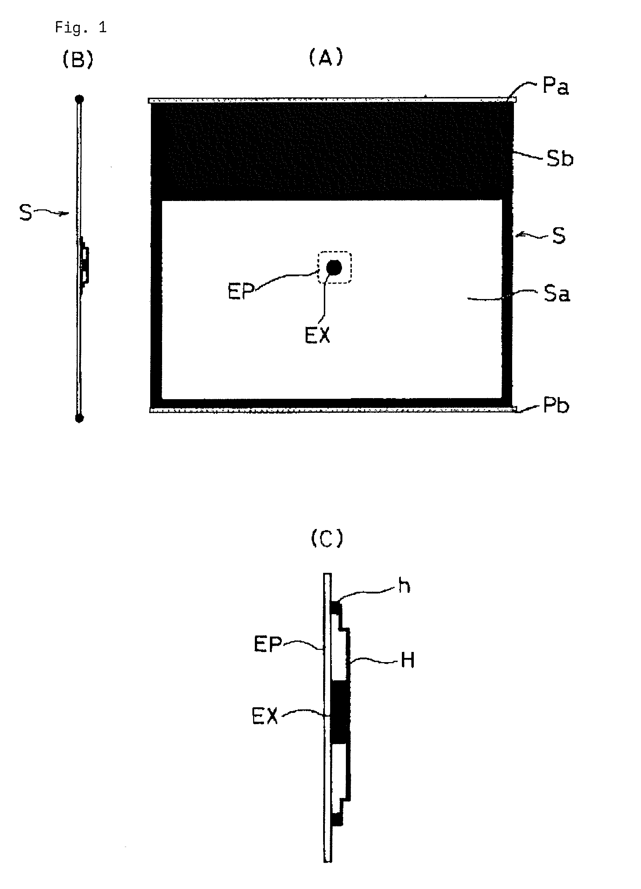

Fig. 1A is a front view illustrating a configuration of a screen-integrated speaker according to a first embodiment of the invention, Fig. 1B is a side view illustrating the configuration of the screen-integrated speaker according to the first embodiment of the invention, and Fig. 1C is a partially enlarged side view illustrating the configuration of the screen-integrated speaker according to the first embodiment of the invention. A display area Sa is formed on the lower portion of a square screen S of 150 inches, and a non-display area Sb is formed around the display area Sa. A pipe Pa for rolling up the screen is formed at the upper end of the screen S, and a pipe-shaped weight Pb is attached to the lower end thereof.

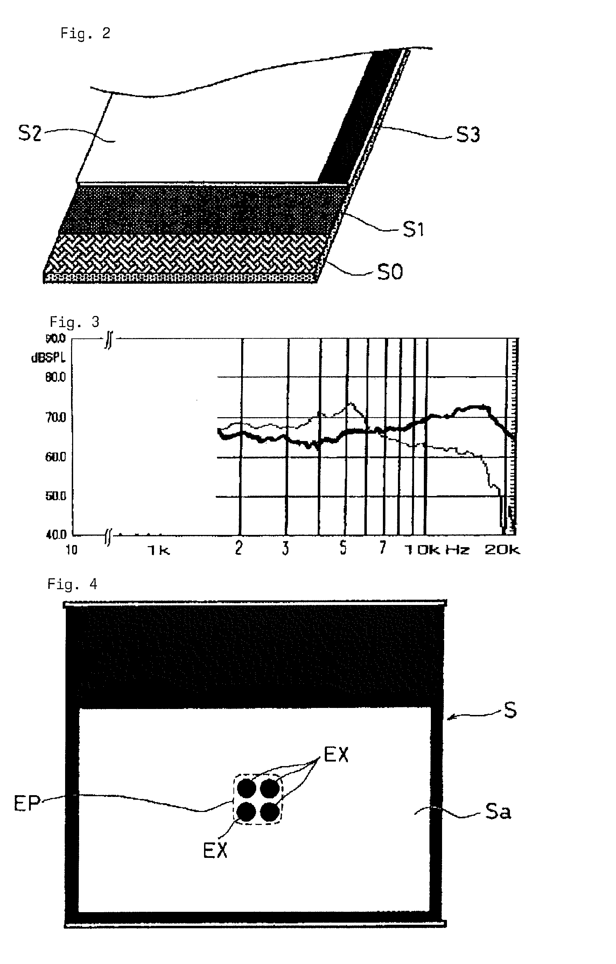

As shown in the partly exploded perspective view in Fig. 2, the screen S includes a sheet type fibrous structure S0 composed of a fibrous structure of 190 µm in thickness including 20 yarns/inch formed of a woven fabric of polyethylene naphthalate (PEN) fibers, a light-shielding layer S1 of 90 µm in thickness formed on the surface of the fibrous structure S0, and a light-reflecting layer S2 of 130 µm in thickness formed on the light-shielding layer S1. The non-display area Sb is formed with a black printed layer S3 on the second laminated portion S2. The weight/unit area of the fibrous structure S0 is 175 g/m², the cover factor is 1075, the apparent Young's modulus of the fibers is 3000 N/m². The weight/unit area of the screen including the light-shielding layer S1 and the light-shielding layer formed on the fibrous structure S0 is 530 g/m².

In the first embodiment, the thickness of the fibrous structure S0 is determined to be 190 µm. However, the thickness may be set to a value in a range from 50 to 2000 µm according to the used frequency band. The apparent Young's modulus of the fibers which constitutes the fibrous structure S0 is preferably set to a range from 3000 N/mm² to 150000 N/mm². In the case in which the fibrous structure S0 is formed of the non-woven fabric or the knitted fabric of multifilament, the single yarn fineness is preferably selected to be included in a range from 1 to 15 dtex. In the case in which the fibrous structure S0 is formed of the knitted fabric of monofilament, the single yarn fineness is preferably selected to be included in a range from 50 to 20000 dtex. Preferably, the cover factor in the range from 1000 to 3000, the weight/unit area of the fibrous structure S0 in a range from 50 to 400 g/m², and the number of yarns of at least 15 yarns/inch are selected for the fibrous structure S0.

When the cover factor of the fibrous structure S0 is less than 1000, when resin is used for the light-shielding layer S1 and the light-shielding layer, the amount of fibers which transmits vibrations is not enough, an hence the screen does not generates a sound with a sense of realism. On the other hand, when the cover factor is increase to a value larger than the 3000, significant improvement in terms of the sense of realism cannot be expected, and the weight of the screen is increased, which gives a tendency to make transport and installation of the screen difficult. The more preferable cover factor is in the range from 1000 to 2500.

The fibers which constitute the fibrous structure S0 preferably have the Young's modulus of 3000 N/mm2 in view of transmitting the vibrations easily and generating the sound with the sense of realism. It is further preferable that the specific gravity of the fibers which constitute the fibrous structure S0 is at least 1.10 from the same point of view. More specifically, the fibers preferably includes at least one of aramid fibers, carbon fibers, glass fibers, polyester fibers such as polyethylene terephthalate fibers or polyethylene naphthalate fibers, polyamide fibers such as nylon 6 or nylon 66, polyolefin fibers such as polyethylene or ultra high molecular weight polyethylene. Among others, polyester fibers such as polyethylene naphthalate fibers, polyethylene terephthalate, aramid fibers, and carbon fibers, specifically, polyethylene naphthalate fibers are preferable for realizing a sound with the sense of realism. These fibers may be combined, mixed, or blended.

The fibrous structure S0 is impregnated with resin such as urethane resin, acryl resin, melamine resin, unsaturated polyester resin, saturated polyester resin within a range from 0.1 to 30 percent by weight (more preferably a range from 0.1 to 20 percent by weight) as needed and, among others, impregnated with saturated polyester resin. In view of vibrating the fibrous structure S0 sufficiently as the speaker, it is preferable that the cloth is not impregnated with resin. However, in order to enhance the converging property and improving handling property as the screen, it is preferable that the fibrous structure S0 is impregnated with resin. The amount of resin is preferably 0.1 to 17 percent. When the amount of resin exceeds 30 percent with reference to the weight of the fibrous structure S0, the fibrous structure S0 vibrates sufficiently, and hence generation of the sound with the sense of realism, which is the object, is difficult.

The fibrous structure S0 formed of polyethylene naphthalate is preferably smoothened on its surface and calendered for the purpose of generating the sound with the sense of realism. The calendaring work may be carried out by selecting a suitable tool such as a metallic roller, a rubber roller, a paper roller and adjusting the roller contact pressure and the temperature to a suitable range. For example, it may be carried out by the combination of the metallic rollers or of the metallic roller and the paper roller, the contact pressure set to a rather high value, and the roller temperature set in a range from 150 °C to 220 °C.

The fibrous structures S0 which satisfies the ranges described above includes those shown below.
(1) a plain woven fabric of each number of warp and weft yarns of 20 yarns/inch using polyethylene naphthalate fibers manufactured by Teijin Techno Products Limited (product's name "Teonex"; 1100 dtex/250 filaments, an apparent Young's modulus of 31500 N/mm²) for the warp yarns and the weft yarns.
(2) a plain woven fabric of each number of warp and weft yarns of 20 yarns/inch using para-aramid fibers manufactured by Teijin Techno Products Limited (product's name "Technora"; 1100 detex/1000 filaments, a specific gravity of 1.38, an apparent Young's modulus of 100000 N/mm²) for the warp yarns and the weft yarns.
(3) A plain woven fabric of each number of warp and weft yarns of 20 yarns/inch using para-aramid fibers manufactured by Teijin Techno Products Limited (product's name "Twaron"; 1100 detex/1000 filaments, a specific gravity of 1.38, an apparent Young's modulus of 100000 N/mm²) for the warp yarns and the weft yarns.
(4) A plain woven fabric of each number of warp and weft yarns of 20 yarns/inch using polyester fibers manufactured by Teijin Techno Products Limited (product's name "Tetron"; 1100 detex/250 filaments, a specific gravity of 1.38, an apparent Young's modulus of 17000 N/mm²) for the warp yarns and the weft yarns.
   The light-shielding layer S1 formed on the fibrous structure S0 is composed of a black polyvinyl chloride layer of a thickness of 90 µm containing carbon black of 30 percent by weight. The polyvinyl chloride layer is formed by laminating or calendaring. Formation of the polyvinyl chloride layer is preferably done by laminating from the viewpoint that weight/unit area of the screen is reduced and hence improvement of the sound quality is expected. The measured light-shielding rate was 99.99 percent.

When the woven fabric composed of the carbon fibers or fibers which are dyed or colored at the time of spinning base fibers are used as the fibers, the light-shielding layer S1 does not necessarily have to be provided. In this case as well, the above-described measured light-shielding rate of the screen may be set to be at least 99. 9 percent.

When coloring the fibers as described above, for example, in the case of the polyester fibers such as the polyethylene terephthalate fibers or the polyethylene naphthalate fibers, at least one of pigment or disperse dye and cationic die is preferably used. Although it is the same for the aramid fibers, when the fibers are colored at the time of making the base fibers, specifically a pigment having a heat-resistant property, preferably, having a sublimation and decomposition temperature of at least 300 °C is preferably used. The preferable content is 0.1 to 5.0 percent by weight with reference to the fibers.

The light-shielding layer S1 is preferably composed of a layer including at least one of polyvinyl chloride resin, polyurethane resin, acryl resin, and polyolefin resin, and it may be provided on the backside of the fibrous structure S0 as described later. The light-shielding layer S1 contains pigment or dye having concealing property by 0.03 to 30 percent by weight for providing the light-shielding property. The pigment as such is, for example, carbon black which has high concealing property, although it is not limited thereto. The disperse dye or cationic dye is preferred as the dye and, specifically, the disperse die is preferred. In this case, it is preferable that the measured light-shielding rate of the screen with respect to an illumination intensity of 50000 lux is set to at least 99.9 percent.

For example, the light-reflecting layer S2 formed on the light-shielding layer S1 is composed of a white polyvinyl chloride layer containing titanium dioxide of 30 percent by weight and having a thickness of 1:30 µm, and the polyvinyl chloride layer is formed by laminating. The measured light-reflection was 93 percent. It is preferable to add inorganic particles (such as silica, alumina, zirconia, titan chloride, glass powder, calcium carbonate, barium sulfate) to the while polyvinyl chloride layer, because the reflecting power of the screen is increased, and the projecting characteristics are improved. The weight of the fibrous structure S0 with respect to the entire screen was 30 percent. The woven fabric used above was impregnated with melamine resin of 15 percent by weight.

The light-reflecting layer S2 is preferably formed of polyolefin resin, acryl resin, polyurethane resin in addition to the above-described polyvinyl chloride resin. In this case, the average reflectance of visible light of 380 to 780 nm measured at the screen is at least 9.3 percent. The light-reflecting layer S2 may contain pigment and dye. The pigment includes titanium oxide, zinc oxide and chrome oxide, and specifically, the titanium oxide is preferable. As the dye, disperse dye and cationic dye are preferable.

The light-reflecting layer S2 may be formed by securing spherical inorganic particles on the fibrous structure S0. Therefore, the light-reflecting layer S2 preferably contains the pigment, the dye or the inorganic particles in white color and, more preferably, by 0.03 to 70 weight percent in order to improve the reflecting power of the screen.

When the above-described light-reflecting layer S2 is formed by securing the spherical inorganic particles on the fibrous structure S0, for example, the light-reflecting layer S2 is composed of the fibrous structure S0 including polyurethane or acrylic resin coated or laminated thereon by 30 to 70 weight percent with reference to the weight of the fibrous structure S0, and the spherical inorganic particles secured on the surface of the resin by 15 to 35 weight percent with reference to the weight of the fibrous structure S0.

It may be a layer formed by laminating a film which serves as at least one of the light-shielding layer S1 and the light-reflecting layer S2 directly on the fibrous structure S0 or by bonding the same with additional resin. The film may be formed of, for example, polyethylene terephthalate based polyester or polyethylene naphthalate.

The weight of the fibrous structure is 20 to 95 percent, preferably, 25 to 70 percent, and more preferably, 30 to 70 percent of the entire weight of the screen. Accordingly, the fibrous structure S0 transmits the vibrations of the actuators effectively, and provides a sound with a sense of realism.

It is recommended to provide a light-shielding layer formed of a black polyvinyl chloride layer containing carbon black by 30 percent by weight and having a thickness of 90 µm on the back surface (the light-shielding layer S1, the surface on which the light-reflecting layer S2 is not provided) of the fibrous structure S0 The light-shielding layer is preferably formed by laminating.

The display area Sa of the screen S is provided with a square exciting panel EP on the back surface thereof. The exciting panel EP is formed with four fibrous structures of the same material as the fibrous structures S0 which constitute the screen S and impregnated with epoxy resin being 1.35 times in weight of four fibrous structures S0, constitutes a panel-shaped structure having a thickness of 1000 µm. The lengthwise and widthwise dimensions of the exciting panel is 120 mm x 120 mm.

Referring back to Fig. 1, the actuator (exciter) EX is mounted to the exciting panel EP, which is mounted to the back surface of the screen S via an epoxy resin based adhesive agent layer, also via an epoxy resin based adhesive agent layer. In the first embodiment, The actuator EX is a moving coil type electric/acoustic converter with an output of 3W, in the first embodiment, and the structure thereof is the same as those disclosed in JP-A-10-243491 and JP-A-11-331969 which is previously applied by the present applicant.

The distal end surface of the cylindrical bobbin which defines the front end surface of the actuator EX is fixed to the exciting panel EP with adhesive agent. The rear end surface of the magnetic circuit which defines the rear end portion of the actuator EX is held by a metallic holding member H which also serves as a dust-proof cover and a radiator to be fixed to the exciting panel EP with the intermediary of an elastic holding member h.

When a voice signal in a voice frequency band (several tens Hz to several tens kHz) is supplied to the actuator EX via a signal line, not shown, a current flows in a voice coil wound around the outer peripheral surface of the bobbin, and hence the bobbin vibrates in the fore-and-aft direction. The vibrations is transmitted to the exciting panel EP via the distal end surface of the bobbin, and a fore-and-aft vibration component at a relatively low frequency and a bending vibration component at a relatively high frequency are excited by the EP. The fore-and-aft vibration component at a relatively low frequency is transmitted form the exciting panel EP to the screen S, and excites the screen S with the vibrations in the fore-and-aft direction. In contrast, only a slight part of the bending vibration component at a high frequency is transmitted to the screen S having relatively low rigidity, and excites the screen S with the bending vibrations. In this manner, the low-frequency component is mainly generated by the vibrations of the screen S in the fore-and-aft direction, and the high-frequency component is mainly generated by the bending transducer of the exciting panel EP.

The screen in the first embodiment is manufactured by the following method.

The screen having the light-shielding layer S1 and the light-reflecting layer S2 is applied with water dispersion mixed with melamine resin of 2 to 40 parts by weight together with cross linking agent, is dried at the temperature from 100 to 180°C, and is heat treated (curing) at a temperature of 150 to 220°C. Accordingly, the resin is adjusted to the above-described amount.

Also, the screen having the light-shielding layer S1 and the light-reflecting layer S2 only on one of the surfaces of the fibrous structure S0 is obtained by double-coating with polyurethane resin and polyvinyl chloride resin containing carbon black. In this case, in the case of the fibrous structure S0 for a general screen, with the rough woven fabric having the cover factor of less than 1000, the other surface of the woven fabric is also impregnated with resin in the light-shielding layer, and hence application of the resin only on one surface is difficult.

On the other hand, in the case of laminating, for example, a polyester based film which also serves as at least one of the light-shielding layer S1 and the light-reflecting layer S2 on the fibrous structure S0, it is laminated by using a flat metal roller and rollers formed of at least one of flat metal, paper and rubber, heating one of the rollers to a temperature of 30 to 220°C and press-fitting the polyester based film at a contact pressure of at least 2 kg/cm.

The light-reflecting layer S2 may be formed by securing the spherical inorganic particles on the surface of the fabric. In order to secure the spherical inorganic particles to the fabric, polyurethane resin, acryl resin and the like containing the same particles by 15 to 75 percent is coated with a coater having a clearance of one to two times diameter of the spherical inorganic particles, then drying at a temperature of 100 to 150°C and heat treating at a temperature of 140 to 210°C. It is also possible to inject resin solution containing the spherical inorganic particles. However, existence of the spherical inorganic particles uniformly dispersed on an uppermost layer is necessary.

Then, the actuator is arranged on the surface on which at least the light-reflecting layer S2, preferably, the light-shielding layer S1 and the light-reflecting layer S2 are not formed so as to be used as the screen-integrated speaker. The actuator includes the magnetic circuit and the voice coil.

It is preferable to apply a suitable tensile force to the screen by fixing the upper portion of the screen and attaching a weight to the lower portion or pulling the lower portion, or by fixing to a frame or the like in view of generating a sound with a sense of realism. In this case, the tensile force measured in the vertical direction of the screen (the direction of weight application) is preferably at least 0.5 kg/m, more preferably 1 to 5 kg/m.

Fig. 3 illustrates experimental data showing acoustic characteristics of the screen-integrated speaker according to the first embodiment shown in Fig. 1. The lateral axis represents the frequency, and the vertical axis represents the amplitude of the acoustic output (sound pressure). A thick curved line shows the acoustic characteristics of the screen-integrated speaker according to the first embodiment. A thin curved line shows the acoustic characteristics of the speaker obtained by removing the exciting panel EP from the configuration shown in Fig. 1 and mounting the actuator EX directly to the back surface of the screen S for comparison. When the acoustic characteristics of the both are compared, it is understood that the component in the high frequency is promoted and desirable acoustic characteristics are realized in a wide range from the low frequency to the high frequency. In the configuration in which the exciting panel EP is not used, the characteristic of the high frequency is improved by further enhancing rigidity of the screen S without impairing easiness of rolling up or deployment.

### [Examples]

Hereinafter, the configuration and the advantages of the screen-integrated speaker according to the first embodiment will be described with examples in detail. The sense of realism and the rolling up property in the examples are measured as follows.
(1) Sense of Reality
   An actuator (actuator 3W x 1 manufactured by AUTHENTIC Ltd.) including a magnetic circuit and a voice coil was mounted on the back surface (the surface opposite from the light-reflecting layer S2) of a screen (20 inches), and sounds are generated and evaluated by actual listening and actual appreciation in five levels, giving 5 points for the screen which gives the best sense of realistic, and one point for the one which gives the worst sense of realistic. The actual listening is done for distinctness of language and clearness of the sound in the high frequency range and comprehensive evaluation is made. In this case, the screen is hung with a tensile force of 1.0 kg.
(2) Rolling Up Property
   As evaluations for storage, transportability, and installability, the screen-integrated speaker attached with the screen and the actuator is rolled up into a cylindrical shape of 20 cm in diameter, is evaluated in three levels, giving three points for those rolled up with most easiness, and one point for those rolled up with most difficulty.
(3) Light-Shielding Rate
   Based on JIS R3106, the light-shielding property with respect to an illumination intensity of 50000 lux is measured.
(4) Reflectance of Visible Light
   The reflecting power in a range from 380 to 780 nm in the visible light area is measured using CE3100 manufactured by Macbeth and the average value is obtained.

### [Example 1]

A plain woven fabric of each number of warp and weft yarns of 20 yarns/inch using polyethylene naphthalate fibers manufactured by Teijin Techno Products Limited (product's name "Teonex"; 1100 dtex/250 filaments, a specific gravity of 1. 38, an apparent Young's modulus of 31500 N/mm²) for the warp yarns and the weft yarns was woven. In this case, the cover factor was 1265.

Then, a score roll #400 (manufactured by Daiichi Kogyo Co., Ltd.) and anhydrous sodium sulfate are provided by 0.5g /l respectively, so that excessive oil agent added to the base fibers and when weaving is removed (refined).

Then, the plain woven fabric was dipped in 150 g/l of melamine resin (Bekkamin J101 (Dainippon Ink and Chemicals, Incorporated)) and 50 g/l of catalytic agent, was dried quickly at a temperature of 130 °C and was cured at a temperature of 180°C. The amount of attached melamine resin was 15 weight percent with reference to the weight of the above-described woven fabric. Then, the surface smoothing process of a flat metallic roll/ paper roll by calendering is carried out at a temperature of 200°C and a contact pressure of 3 ton/cm.

Two layers of polyvinyl chloride resin were coated on one of the surfaces of the woven fabric as the light-shielding layer S1 and the light-reflecting layer S2 required for the display screen respectively by 100 g/m² and 200 g/m² (hereinafter, referred to as "display screen process"). The light-shielding layer S1 was block polyvinyl chloride resin containing carbon black by 30 percent, and the light-reflecting layer S2 was white polyvinyl chloride containing TiO₂ by 30 weight percent. The light-shielding rate measured at the screen was 99.99 percent, and the reflecting power of visible light was 93 percent. The rate of the woven fabric by weight with respect to the weight of the entire screen was 37 weight percent. The evaluation was 5 points for the sense of realism and 3 points for the rolling up property.

### [Example 2]

The same process and evaluation as Example 1 were carried out except that a plain woven fabric of each number of warp and weft yarns of 20 yarns/inch using para-aramid fibers manufactured by Teijin Techno Products Limited (product' name "Technora"; 1100 detex/1000 filaments, a specific gravity of 1.38, an apparent Young's modulus of 100000 N/mm²) for the warp yarns and the weft yarns was provided. The light-shielding rate measured at the screen was 99.99 percent and the reflecting power of visible light was 93 percent. The rate of the woven fabric by weight with respect to the weight of the entire screen was 35 weight percent. The evaluation was 5 points for the sense of realism and 3 points for the rolling up property.

### [Example 3]

The same process and evaluation as Example 1 were carried out except that a plain woven fabric of each number of warp and weft yarns of 20 yarns/inch using para-aramid fibers manufactured by Teijin Techno Products Limited (product's name "Twaron"; 1100 detex/1.000 filaments, a specific gravity of 1.38, an apparent Young's modulus of 100000 N/mm²) for the warp yarns and the weft yarns was provided. The light-shielding rate measured at the screen was 99.99 percent and the reflecting power of visible light was 93 percent. The rate of the woven fabric by weight with respect to the weight of the entire screen was 35 weight percent. The evaluation was 5 points for the sense of realism and 3 points for the rolling up property.

### [Example 4]

The same process and evaluation as Example 1 were carried out except that a plain woven fabric of each number of warp and weft yarns of 20 yarns/inch using polyester fibers manufactured by Teijin Techno Products Limited (product's name "Tetron"; 1100 detex/250 filaments, a specific gravity of 1.38, an apparent Young's modulus of 17000 N/mm²) for the warp yarns and the weft yarns was provided. The light-shielding rate measured at the screen was 99.99 percent and the reflecting power of visible light was 93 percent. The rate of the woven fabric by weight with respect to the weight of the entire screen was 35 weight percent. The evaluation was 4 points for the sense of realism and 3 points for the rolling up property.

### [Example 5]

A screen was manufactured in the same manner as Example 1 except that impregnation with the melamine resin was not carried out. The light-shielding rate measured at the screen was 99.99 percent and the reflecting power of visible light was 93 percent. The rate of the woven fabric by weight with respect to the weight of the entire screen was 37 weight percent. The evaluation was 4 points for the sense of realism and 3 points for the rolling up property.

### [Example 6]

The same process and evaluation were carried out as Example 1 except that calendaring was not carried out. The light-shielding rate measured at the screen was 99.99 percent and the reflecting power of visible light was 93 percent. The rate of the woven fabric by weight with respect to the weight of the entire screen was 37 weight percent. The evaluation was 4 points for the sense of realism and 3 points for the rolling up property.

### [Example 7]

The same process and evaluation were carried out as Example 1 except that the display screen process was the double-coating of polyurethane resin and polyvinyl chloride resin. The light-shielding layer S1 was black polyurethane containing black carbon by 30 weight percent, and the light-reflecting layer S2 was white polyvinyl chloride containing TiO₂ by 30 weight percent. The light-shielding rate measured at the screen was 99.99 percent and the reflecting power of visible light was 95 percent. The rate of the woven fabric by weight with respect to the weight of the entire screen was 35 weight percent. The evaluation was 4 points for the sense of realism and 3 points for the rolling up property.

### [Example 8]

The same process and evaluation were carried out as Example 1 except that the display screen process was done by fixation with polyurethane resin 100 g/m² provided with spherical glass beads 30 g/m²(30 µm in average particle diameter). The light-shielding layer S1 is generated by diffuse reflection substantially by the spherical glass beads, and the glass beads function both as the light-shielding layer S1 and the light-reflecting layer S2. The light-shielding rate measured at the screen was 99.99 percent and the reflecting power of visible light was 96 percent. The rate of the woven fabric by weight with respect to the weight of the entire screen was 45 weight percent. The evaluation was 4 points for the sense of realism and 3 points for the rolling up property.

### [Example 9]

The same process and evaluation were carried out as Example 1 except that the display screen process was done by bonding a light-shielding polyester film (manufactured by Teijin Limited, having a thickness of 90 µm) and a visible light reflecting polyester film (manufactured by Teijin Limited, having a thickness of 45 µm). The light-shielding rate measured at the screen was 99.99 percent and the reflecting power of visible light was 97 percent. The rate of the woven fabric by weight with respect to the weight of the entire screen was 40 weight percent. The evaluation was 4 points for the sense of realism and 3 points for the rolling up property.

### [Example 10]

Saturated polyester resin manufacture by Goo Chemical Co.,Ltd. (Product's name "PLAS COAT Z-565") was used instead of melamine resin, and the plain woven fabric was quickly dipped in liquid prepared by mixing water, was saturated polyester resin and catalytic agent by 60 weight part, 50 weight part and 2.5 weight part respectively, and was dried quickly at a temperature of 200°C. The amount of attached saturated polyester resin was 12 weight percent with reference to the weight of the woven fabric, and the calendering was not carried out thereafter. Other than the things described above were the same as Example 1. The light-shielding rate measured at the screen was 99.99 percent and the reflecting power of visible light was 93 percent. The rate of the woven fabric by weight with respect to the weight of the entire screen was 43 weight percent. The evaluation was 5 points for the sense of realism and 3 points for the rolling up property.

### [Example 11]

The process and evaluation as Example 1 were carried out except that the woven fabric as in Example 1 was impregnated in epoxy resin and was dried and semi-cured by a normal method to obtain epoxy pre-preg. The light-shielding rate measured at the screen was 99.99 percent and the reflecting power of visible light was 95 percent. The rate of the woven fabric by weight with respect to the weight of the entire screen was 28 weight percent. The evaluation was 4 points for the sense of realism and 1 points for the rolling up property.

### [Example 12]

A plain woven fabric of each number of warp and weft yarns of 15 yarns/inch using a polyethylene naphthalate fibers manufactured by Teijin Techno Products Limited (product's name "Teonex" 1100 detex/250 filaments, a specific gravity of 1.38, an apparent Young's modulus of 30000 N/mm²) for the warp yarns and the weft yarns was manufactured. In this case, the cover factor was 948. Other than the things described above were the same as Example 1. The light-shielding rate measured at the screen was 99.99 percent and the reflecting power of visible light was 95 percent. The rate of the woven fabric by weight with respect to the weight of the entire screen was 25 weight percent. The evaluation was 2 points for the sense of realism and 3 points for the rolling up property.

### [Example 13]

A plain woven fabric of each number of warp and weft yarns of 48 yarns/inch using polyethylene naphthalate fibers manufactured by Teijin Techno Products Limited (product's name "Teonex" 1100 detex/250 filaments, a specific gravity of 1.38, an apparent Young's modulus of 30000 N/mm²) for the warp yarns and the weft yarns was manufactured. In this case, the cover factor was 3033. Other than the things described above were the same as Example 1. The light-shielding rate measured at the screen was 99.99 percent and the reflecting power of visible light was 95 percent. The rate of the woven fabric by weight with respect to the weight of the entire screen was 37 weight percent. The evaluation was 4 points for the sense of realism and 1 points for the rolling up property.

Fig. 4 is a front view showing a configuration of the screen-integrated speaker according to the second embodiment. In the second embodiment, one exciting panel EP ware mounted to the back surface of the display area of the screen, and the four actuators EX in total are mounted to the back surface of the exciting panel EP. The four actuators EX are mounted to positions around the center in rotation symmetry in a state in which the respective actuators are placed at positions as close to the center of the exciting panel EP as possible.

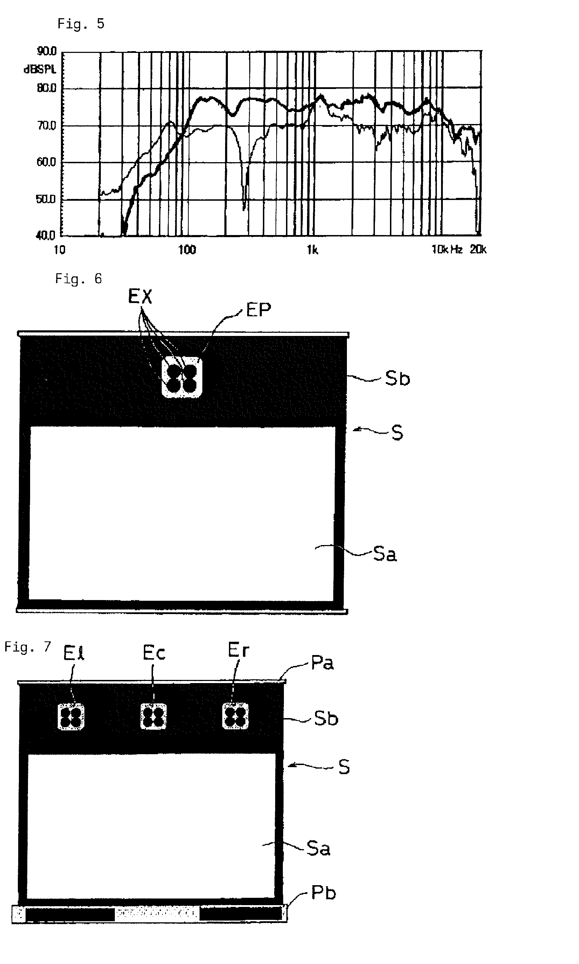

Fig. 5 illustrate experimental data showing the acoustic characteristics of the screen-integrated speakers according to the first and second embodiments shown in Fig. 1 and Fig. 4, respectively by comparison. The lateral axis represents the frequency, and the vertical axis represents the amplitude of the acoustic output (sound pressure). A thick curved line shows the acoustic characteristics of the screen-integrated speaker according to the second embodiment. A thin curved line shows the acoustic characteristics of the screen-integrated speaker according to the first embodiment. The total exciting power supplied from the outside to the actuator EX is the same value (1 Watt) for the case in which the one actuator EX is provided and the case in which the four actuators EX are provided. In other words, in the case shown in Fig. 4, the power used in the case shown in Fig. 1 is distributed to the four actuators EX.

When comparing the acoustic characteristics of the both in Fig. 5, it is understood that the output in the frequency band of 100 Hz or higher is increased and the frequency characteristic is closer to a flat state by using the plurality of actuators EX. In particular, the high-frequency component in a range from 10 kHz to 20 kHz is increased.

Fig. 6 is a front view showing a configuration of the screen-integrated speaker according to a third embodiment of the invention. In the third embodiment, the exciting panel EP and the four actuators EX mounted thereon are formed on the back surface of the non-display area Sb on the upper portion of the screen S instead of the display area Sa thereof. In the first embodiment and the second embodiment in which the exciting panel EP and the single or the plurality of actuators EX are mounted on the display area Sa of the screen S, oscillation of the screen occurs by the vibration of the low-frequency component in the fore-and-aft direction, and hence the image quality on the display screen is deteriorated by fractions of percentages. In the third embodiment, since the exciting panel EP and the actuators EX are mounted to the non-display area Sb of the screen S, and hence deterioration of the image quality of the display screen in association with the oscillation of the screen is avoided.

Fig. 7 is a front view showing a configuration of the screen-integrated speaker according to a fourth embodiment of the invention. According to the fourth embodiment, an exciting unit Er for a right channel, an exciting unit El for a left channel and an exciting unit Ec for the center channel each formed by mounting the four actuators EX on the single exciting panel EP are mounted to the left side, the right side and the center portion of the non-display area Sb at regular intervals. Then, a weight Pb for providing a tensile force in the vertical direction to the screen S also serves as a cylindrical speaker system as a subwoofer. Integrated in the cylindrical weight Pb are a related amplifier and a power source in addition to the subwoofer.

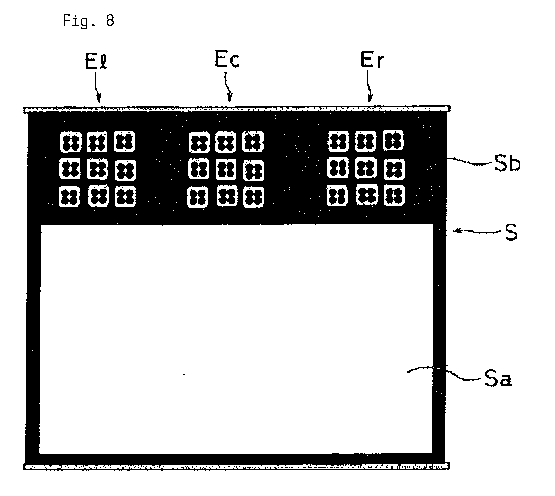

Fig. 8 is a front view showing a configuration of the screen-integrated speaker according to a fifth embodiment. According to the fifth embodiment, the exciting unit Er for the right channel, the exciting unit El for the left channel and the exciting unit Ec for the center channel each composed of the nine exciting panels EP each having the four actuators EX mounted thereto are arranged adjacently to each other are mounted to the left side, the right side and the center portion of the back surface of the non-display area Sb of the screen S at regular intervals.

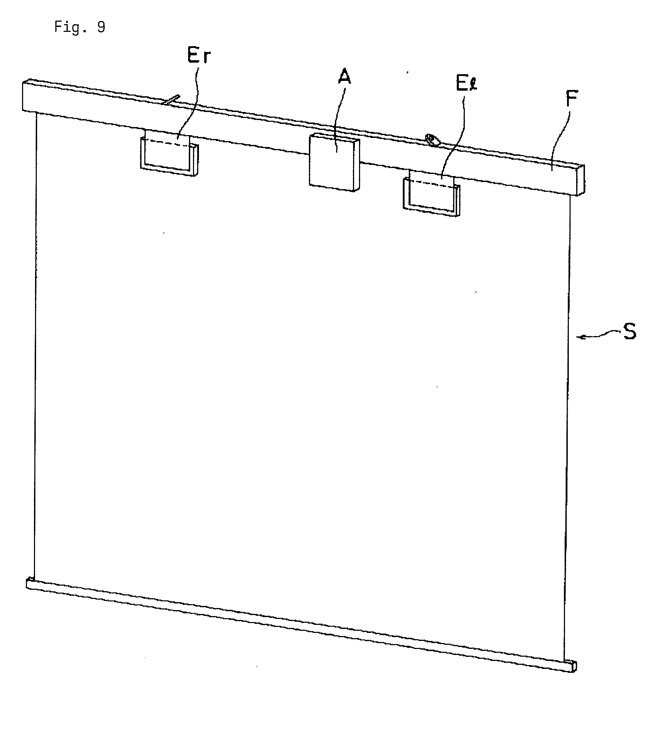

Fig. 9 is a perspective view of the configuration of the screen-integrated speaker according to a sixth embodiment when viewed from the back side rear (back) side of the speaker S. In the sixth embodiment, the exciting unit Er for the right channel and the exciting unit El for the left channel each composed of the two actuator EP each having the four actuators EX mounted thereon are mounted to the left side and the right side of the back surface of the non-display area (not shown) provided on the upper portion of the screen S in the same manner as the first to fifth embodiments. This speaker S is supported at the upper end surface by a head frame F, and an amplifier A used for vibrating the exciting unit Er and the exciting unit El is fixed to the substantially center on the back surface of the head frame F. The amplifier A may be integrated in the head frame F. The power source may also be fixed to the head frame. It is also possible to fix the amplifier to the pipe Pa for rolling up instead of the head frame F.

The case in which polyethylene naphthalate (PEN) fibers are used as the fibers for the fibrous structure which constitutes the fibrous structure S0 and the exciting panel has been described thus far. However, other homogenized fibrous woven fabrics may be used as needed as long as the values of the mechanical and physical properties which determine the acoustic characteristics such as the Young's modulus, the density, and the rate of acoustic attenuation can be adjusted in a suitable range. As such the fibers, for example, aromatic polyamide, carbon, glass, polyethylene terephthalate, polyamide, polyethylene naphthalate, polypara-phenylene-benzbisoxazole, polyethylene, polyarylate, polyolefin, PBO, vinylon fibers. The above-described fibers may be combined, mixed and blended by other fibers, and the fibrous structure such as the woven fabric, the knitted fabric, and the non-woven fabric may be woven, knitted, mixed with other fibers. Other fibers described above, may be natural fibers such as cotton or wool.

It is also possible to employ a multi-woven structure fabricated by weaving a plurality of types of fibers in combination or a multi-layer structure including woven fabrics or knitted fabrics in different types of fibers may be employed for the purpose of fine-adjusting the acoustic characteristics to optimal values.

The case in which epoxy resin is used as the resin to be impregnated in the exciting panel has been describe above. However, other suitable homogenized resins may be used. For example, melamine resin, polyurethane resin, polyester resin, acryl resin, phenol resin, diallyl phthalate resin may be employed.

The configuration in which the fibrous structure S0 is formed by weaving suitable fibers has been described above. However, the knitted fabric may be employed as the fibrous structure S0 as the fibrous structure S0 instead of fabric. In the case of the knitted fabric, any one of the warp and weft knitted fabrics (round knitting, tricot fabric) may be employed, and a multi-knitted fabric. The high knitting density, not lower than 20 yarns per inch, is preferable in order to ensure dimensional stability. However, when giving preference to improvement of the acoustic characteristics over the dimensional stability, the knitting density may be lower than 20 yarns per inch.

As the fibrous structure S0, non-woven fabrics may be used in addition to the knitted fabrics and the woven fabrics. In this case, the dry-type non-woven fabric is more desirable than the wet-type non-woven fabric. In such a case, a suitable thickness is in a range from 100 µm to 500 µm.

A film material such as resin film may be used as the fibrous structure S0 instead of the fibrous structure such as the knitted fabric, the woven fabric and the non-woven fabric. In the case of the resin film, polyethylene naphthalate is suitable as the resin. However, polyethylene terephthalate, polyurethane, polyamide, aromatic polyamide and polyolefin are also applicable. The thickness of these resin films is preferably in a range from 50 µm to 2000 µm, more preferably, in a range from 50 µm to 1000 µm.

## Claims

1. A screen-integrated speaker comprising:
a screen mainly composed of a fibrous structure; and
at least one actuator mounted to the back surface of the screen.

2. The screen-integrated speaker according to Claim 1, wherein the at least one actuator is mounted to the back surface of the screen with the intermediary of at least one exciting panel.

3. The screen-integrated speaker according to Claim 1 or 2, wherein the screen is formed with a light shielding layer and a light reflecting layer on one surface thereof.

4. The screen-integrated speaker according to Claim 3, wherein the screen is further formed with a light-shielding layer on the surface opposite from the surface on which the light-shielding layer and the light-reflecting layer are formed.

5. The screen-integrated speaker according to any one of Claims 1 to 4, wherein the screen is composed of the fibrous structure including fiber-woven fabric or fiber-knitted fabric.

6. The screen-integrated speaker according to Claim 5, wherein the cover factor of the fibrous structure is in the range from 1000 to 3000.

7. The screen-integrated speaker according to Claim 5 or 6, wherein the weight/unit area of the fibrous structure is in the range from 50 to 400 g/m².

8. The screen-integrated speaker according to any one of Claims 5 to 7, wherein the apparent Young's modulus of fibers which constitutes the fibrous structure is in the range from 3000 N/mm² to 150000 N/mm².

9. The screen-integrated speaker according to any one of Claims 5 to 8, wherein the fibers which constitute the fibrous structure is polyethylene naphthalate.

10. The screen-integrated speaker according to any one of Claims 5 to 9, wherein the fibrous structure is impregnated with resin of 0.1 to 30 percent by weight.

11. The screen-integrated speaker according to Claim 10, wherein the resin impregnated in the fibrous structure is saturated polyester resin.

12. The screen-integrated speaker according to any one of Claims 1 to 11, wherein the fibrous structure is calendered.

13. The screen-integrated speaker according to any one of Claims 2 to 12, wherein the at least one exciting panel has a structure in which resin is impregnated in a layered fibrous structure.

14. The screen-integrated speaker according to Claim 13, wherein the fibers which constitute the fibrous structure used for the at least one exciting panel is polyethylene naphthalate.

15. The screen-integrated speaker according to Claim 13, wherein the resin used for the at least one exciting panel is formed of thermosetting resin.

16. The screen-integrated speaker according to any one of Claims 2 to 15, wherein the thickness of the at least one exciting panel is in a range from 400 to 2000 µm.

17. The screen-integrated speaker according to any one of Claims 2 to 16, wherein the at least one exciting panel and the at least one actuator are mounted to arbitrary positions on the back surface of a display area formed on the screen.

18. The screen-integrated speaker according to any one of Claims 2 to 16, wherein the at least one exciting panel and the at least one actuator are mounted to arbitrary positions on the back surface of a non-display area formed on the screen.

19. The screen-integrated speaker according to any one of Claims 1 to 18, wherein the screen is provided with a head frame in which an amplifier which drives the at least one actuator fixed or integrated at the upper end thereof.

20. The screen-integrated speaker according to any one of Claims 1 to 19, wherein the screen is provided with a speaker system as a subwoofer which also serves as a weight which provides a tensile force to the screen at the lower end thereof.

21. The screen-integrated speaker according to any one of Claims 1 to 20, wherein a plurality of the actuators are mounted dispersedly to the at least one exciting panel.

22. The screen-integrated speaker according to any one of Claims 1 to 21, wherein a plurality of the exciting panel and the actuator generate sound at the left and right and the center by being mounted dispersedly at the left and right and the center of the back surface of the screen.
